# EUROPÄISCHE PATENTSCHRIFT

(11) **EP 3 453 565 B1**
(45) Veröffentlichungstag und Bekanntmachung des Hinweises auf die Patenterteilung: **12.08.2020**
(21) Anmeldenummer: 18192973.8
(22) Anmeldetag: 06.09.2018
(51) Int. Cl.: B60N 2/28, B60N 2/68

(54) **FAHRZEUGSITZ, SITZBAUTEIL SOWIE AUFPRALLSCHUTZ**
VEHICLE SEAT, SEAT COMPONENT AND IMPACT PROTECTION
SIÈGE DE VÉHICULE, COMPOSANT DE SIÈGE AINSI QUE PROTECTION CONTRE LES IMPACTS

(30) Priorität: 06.09.2017 DE 102017120516
(43) Veröffentlichungstag der Anmeldung: 13.03.2019
(73) Patentinhaber: BBP Kunststoffwerk Marbach Baier GmbH, 71672 Marbach (DE)
(72) Erfinder: Baier, Marc G., 71672 Marbach am Neckar (DE)
(74) Vertreter: Witte, Weller & Partner Patentanwälte mbB

(56) Entgegenhaltungen:
- DE-A1-102015 113 836
- US-A1- 2016 059 748
- US-A1- 2017 151 894

## Beschreibung

Die vorliegende Offenbarung bezieht sich auf Sitzbauteile, insbesondere auf Sitzbauteile für Fahrzeugsitze. Zumindest gemäß beispielhaften Ausführungsformen bezieht sich die vorliegende Offenbarung auf Sitzbauteile für Kindersitze. Insbesondere bezieht sich die vorliegende Offenbarung ferner auf einen Aufprallschutz, insbesondere einen Seitenaufprallschutz, der an einem Sitzbauteil aufnehmbar ist.

Fahrzeugsitze sind allgemein bekannt. Ferner sind Kindersitze allgemein bekannt, welche regelmäßig derart gestaltet sind, dass sie an oder auf einem Fahrzeugsitz fixierbar sind, um Kindern einen sicheren Halt und im Falle eines Unfalls einen bestmöglichen Schutz zu gewährleisten.

Fahrzeugsitze sind regelmäßig auch mit sogenannten Rückhaltesystemen versehen oder gekoppelt, etwa mit Gurten und dergleichen. Häufig sind auch Kindersitze für die Verwendung fahrzeugeigener Rückhaltesysteme ausgestaltet. Ferner sind Kindersitze bekannt, die eigene Rückhaltesysteme aufweisen.

Aus der US 2017/151894 A1 ist ein Kinderautositz bekannt, mit einem Kopfstützenabschnitt und einer energieabsorbierende Struktur, die in den Kopfstützenabschnitt integriert ist, wobei die energieabsorbierende Struktur mindestens ein energieabsorbierendes Element und ein energiedispergierendes Element beinhaltet und in einem Gehäuse montiert ist, das gleitbeweglich in Bezug auf den Kopfstützenabschnitt montiert ist

Die DE 10 2015 214 910 A1 zeigt einen Seitenschutzmechanismus, der auf einer seitlichen Wange eines Kindersitzes angeordnet ist, wobei der Seitenschutzmechanismus eine schwenkbare Platte aufweist, die in einer ersten Stellung bündig in der Wange angeordnet und in einer zweiten Stellung ausgeklappt ist, wobei ein Rastelement als Lagesicherung in der zweiten Stellung vorgesehen ist.

Die DE 10 2015 113 836 A1 zeigt einen Kindersitz mit einer Sitzschale und wenigstens einem Seitenaufprallmodul, das an einer Seite der Sitzschale angeordnet ist und das dazu vorgesehen ist, seitlich auf die Sitzschale einwirkende Aufprallenergie aufzunehmen, wobei eine schwenkbare Klappe vorgesehen ist, die in einer ersten Stellung versenkt und in einer zweiten Stellung ausgeklappt ist.

Die EP 0 928 718 A2 zeigt eine schaumartige Polsterstruktur, mit Luftkammern, die bei Kindersitzen verwendbar ist.

Die US 2016/0059748 A1 zeigt einen Fahrzeugsitz mit eine äußere Schutzschale, einem inneren Sitzbereich und einer Dämpfungseinheit, die eine Relativbewegung zwischen dem inneren Sitzbereich und der äußeren Schutzschale ermöglicht.

Fahrzeugsitze in Form von Kindersitzen sind beispielsweise aus der US 2010/0295342 A1, der US 7,717,506 B2, sowie der US 8,205,940 B2 bekannt. Die gezeigten Fahrzeugsitze weisen allesamt sogenannte Seitenaufprallschutzanordnungen auf.

Grundsätzlich kann ein zusätzlicher Seitenaufprallschutz, der für einen Fahrzeugsitz vorgesehen ist, die auf den im Sitz sitzenden Insassen im Falle eines sogenannten Seitenaufpralls einwirkenden Kräfte und Beschleunigungen verringern. Übliche Rückhaltesysteme passiver und aktiver Art sind vorrangig darauf ausgerichtet, Kräfte in Fahrzeuglängsrichtung aufzufangen, also etwa bei einem Frontalunfall oder Frontalcrash.

Jedoch treten häufig auch Unfälle auf, bei denen ein seitlicher Aufprall stattfindet, wobei eine Kraft auf das Fahrzeug einwirkt, die etwa quer zur Fahrzeuglängsrichtung (Fahrtrichtung) orientiert ist. Dies kann auch mit Verformungen seitlicher Karosseriebauteile einhergehen, etwa mit Verformungen der Seitenwände, Türen, seitlichen Holme, etc. Es ist bekannt, Fahrzeugsitze, insbesondere Seitenwangen von Fahrzeugsitzen, mit zusätzlichen Einrichtungen zu versehen, die einen solchen Seitenaufprall nach Möglichkeit abschwächen sollen, um die auf den Fahrzeuginsassen einwirkenden Kräfte zu reduzieren.

Ein solcher Seitenaufprallschutz umfasst üblicherweise ein stoßabsorbierendes Material, um die schlussendlich auf den Fahrzeuginsassen einwirkende Beschleunigung bzw. Kraft zu minimieren.

Ein solcher Seitenaufprallschutz ist daher üblicherweise als seitlicher Fortsatz an einer Seitenwange eines Fahrzeugsitzes angebracht. Dies erhöht grundsätzlich die Breite des Fahrzeugsitzes. Darüber hinaus sind Gestaltungen denkbar, bei denen ein Seitenaufprallschutz gar nicht erst erwünscht ist. Dies ist etwa dann der Fall, wenn ein Fahrzeugsitz mittig (zentral) im Fahrzeug angeordnet ist, wobei rechts und links des Fahrzeugsitzes zumindest ein weiterer Sitzplatz vorgesehen ist.

Eine weitere Herausforderung besteht darin, dass der Seitenaufprallschutz häufig nachgiebige und hinreichend weiche Materialien umfasst. Dagegen weisen Seitenwangen von Fahrzeugsitzen häufig zumindest eine steife Trägerstruktur auf. Dies muss bei der Gestaltung und insbesondere bei der Montage des Fahrzeugsitzes beachtet werden.

Vor diesem Hintergrund liegt der Erfindung die Aufgabe zugrunde, ein mit einem Aufprallschutz versehenes Sitzbauteil, insbesondere für einen Fahrzeugsitz, anzugeben, das einfach und kostengünstig herstellbar ist und im Falle eines Unfalls nach Möglichkeit stoßabsorbierend wirkt, um die Belastung auf einen im Fahrzeugsitz sitzenden Insassen möglichst zu reduzieren. Darüber hinaus soll ein entsprechender Aufprallschutz angegeben werden, der als Seitenaufprallschutz für einen Fahrzeugsitz ausgebildet ist. Schließlich soll ein Fahrzeugsitz, insbesondere ein Kindersitz zur Verwendungen in Fahrzeugen, angegeben werden, der mit einem entsprechenden Sitzbauteil versehen ist, das einen Aufprallschutz, insbesondere einen Seitenaufprallschutz, trägt.

Diese Aufgabe wird gemäß einem ersten Aspekt der Erfindung durch ein Sitzbauteil, insbesondere für einen Fahrzeugsitz, gelöst, mit
einem Wandabschnitt, der eine Halteausnehmung aufweist,
einem Aufprallschutz, der einen Prallkörper aus einem stoßabsorbierenden Werkstoff und einen Halteabschnitt aufweist, und über den Halteabschnitt formschlüssig und verliersicher in der Halteausnehmung verrastbar ist,
   wobei der Prallkörper einen Schaumwerkstoff aufweist, und
   wobei am Halteabschnitt ein Kragen ausgebildet ist,
einer Innenschale, die im montieren Zustand den Kragen des Halteabschnitts gegen den Wandabschnitt drückt,
wobei das Sitzbauteil einen doppelschaligen Aufbau mit einer Außenschale und einer Innenschale umfasst, die zumindest in einem Randbereich der Halteausnehmung voneinander beabstandet sind, und
wobei der Abstand zwischen der Innenschale und der Außenschale an eine Dicke des Halteabschnitts zwischen der Innenschale und der Außenschale angepasst ist.

Die Aufgabe der Erfindung wird auf diese Weise vollkommen gelöst.

Erfindungsgemäß ist es möglich, den Aufprallschutz einfach und mit geringem Aufwand am Wandabschnitt des Sitzbauteils zu befestigen. Dies ist zumindest gemäß beispielhaften Ausführungsformen ohne separate Befestigungselemente möglich. Mit anderen Worten ist es nicht erforderlich, Klemmplatten, Schrauben, Klammern oder sonstige Befestigungselemente zu verwenden. Darüber hinaus ist es gemäß zumindest einigen Ausführungsformen nicht erforderlich, stoffschlüssige Fügeverfahren wie Kleben, Schweißen und Ähnliches zu verwenden, um den Aufprallschutz am Wandabschnitt zu befestigen.

Die Montage des Aufprallschutzes am Wandabschnitt ist grundsätzlich ohne Hilfswerkzeuge möglich. Gleichwohl schließt dies nicht aus, dass es Hilfswerkzeuge für die Montage gibt, etwa nach Art eines Schuhanziehers in Form einer oder mehrerer Gleitschienen, vergleichbar einem Reifenheber.

Die Verrastung erlaubt eine grundsätzlich formschlüssige Aufnahme des Aufprallschutzes am oder im Wandabschnitt. Dies schließt jedoch nicht aus, dass eine leichte Vorspannung durch entsprechende Deformation des Aufprallschutzes erzeugt wird, die den Formschluss unterstützt.

Beispielhaft ist der Aufprallschutz als Seitenaufprallschutz gestaltet. Dies führt gemäß beispielhaften Ausgestaltungen dazu, dass das Sitzbauteil grundsätzlich zwei im Wesentlichen spiegelsymmetrisch angeordnete Aufprallschutze aufweist. Es ist jedoch auch vorstellbar, lediglich an der Seite des Sitzbauteils, die der Seite des Fahrzeugs unmittelbar benachbart ist, einen entsprechenden Aufprallschutz vorzusehen.

Im Sinn der vorliegenden Offenbarung ist der Aufprallschutz verliersicher in der Halteausnehmung aufnehmbar. Dies bedeutet, dass der Aufprallschutz bei üblichen Betriebsbedingungen und bei sachgemäßer Verwendung nicht oder nicht zerstörungsfrei vom Wandabschnitt lösbar ist. Dies hat den Vorteil, dass der Aufprallschutz nicht ohne Weiteres verloren gehen kann.

Der Prallkörper weist einen Schaumwerkstoff auf, insbesondere einen viskoelastischen Schaum. Dabei kann es sich etwa um einen viskoelastischen Schaum mit Memory-Effekt handeln. Ein solcher Schaum ist grundsätzlich hinreichend weich und energieabsorbierend. Auf diese Weise können Lastspitzen/Stöße/Beschleunigungsspitzen im Falle eines Aufpralls, insbesondere im Falle eines Seitenaufpralls, abgebaut werden.

Gemäß einer weiteren beispielhaften Ausgestaltung des Sitzbauteils ist der Aufprallschutz einstückig gestaltet. Vorzugsweise besteht der Aufprallschutz aus einem viskoelastischen Schaum. Der viskoelastische Schaum ist hinreichend formstabil, um eine zumindest teilweise formschlüssige Aufnahme des Aufprallschutzes am Wandabschnitt zu erlauben, etwa unter Nutzung einer Rastverbindung.

Die einstückige Gestaltung hat den Vorteil, dass die Fertigung einfach und kostengünstig erfolgen kann. Insbesondere ist es vorstellbar, den Aufprallschutz urformend zu fertigen. Dies schließt jedoch nicht aus, dass der Aufprallschutz zumindest teilweise mit einer Hülle versehen ist, etwa mit einer Beschichtung zur Erhöhung der Verschleißbeständigkeit. Hierbei kann es sich etwa um eine Latexbeschichtung, eine Gummierung und/oder eine sonstige Beschichtung handeln. Auch eine Umhüllung mit einem Stoff ist vorstellbar.

Gemäß einer weiteren beispielhaften Ausgestaltung des Sitzbauteils ist der Halteabschnitt zumindest abschnittsweise mit einer Einschnürung versehen, die an die Form der Halteausnehmung angepasst ist. Bei der Einschnürung kann es sich um eine teilweise oder vollständig umlaufende Nut handeln. Mit anderen Worten ist der Aufprallschutz im Bereich des Halteabschnitts zumindest teilweise hinterschnittig gestaltet, sodass eine Verrastung mit dem Wandabschnitt ermöglicht ist.

Am Halteabschnitt ist ein Kragen ausgebildet. Insbesondere kann der Kragen mit der Einschnürung kombiniert werden. Der Kragen ist üblicherweise größer als die Halteausnehmung gestaltet. Dies verhindert ein Durchrutschen des Aufprallschutzes. Die Einschnürung ist zwischen dem Prallkörper und dem Kragen ausgebildet. Die Einschnürung und der Kragen können gemeinsam mit dem Prallkörper integral und insbesondere einstückig aus einem Schaumwerkstoff gefertigt sein.

Die Einschnürung kann auch als Einkerbung, Eindellung, Umfangsnut oder in ähnlicher Weise bezeichnet sein.

Gemäß einer weiteren beispielhaften Ausgestaltung des Sitzbauteils ist der Aufprallschutz in einer Soll-Montage-Richtung in der Halteausnehmung montierbar, die eine Montage von innen nach außen umfasst. Mit anderen Worten kann der Prallkörper von innen nach außen durch die Halteausnehmung hindurchgeschoben werden, worauf dann die Einschnürung mit einer Umfangswand der Halteausnehmung verrasten kann, und wobei, sofern vorhanden, der Kragen rückwärtig am Wandabschnitt zur Anlage kommen kann. Die Soll-Montage-Richtung umfasst eine Montage ausgehend von einer Innenseite hin zu einer Außenseite.

Im Rahmen der vorliegenden Offenbarung handelt es sich bei der Innenseite um den Bereich des Sitzbauteils, in dem der Insasse des Fahrzeugs sitzt bzw. der dem Insassen zugewandt ist. Demgemäß handelt es sich bei der Außenseite um diejenige Seite des Sitzbauteils, die vom Insassen abgewandt und einer Außenseite des Fahrzeugs zugewandt ist. Die Innenseite des Sitzbauteils ist beispielsweise dem Rücken und/oder seitlichen Flanken des Rumpfes des Insassen zugewandt.

Zur Vereinfachung der Montage ist es vorstellbar, den Prallkörper zumindest abschnittsweise zu verjüngen, und zwar ausgehend von einem Bereich mit einem großen Umfang, der sich an die Einschnürung anschließt, hin zu einem Bereich mit einem verringerten Umfang, der ein Ende des Aufprallschutzes definiert, das vom Halteabschnitt abgewandt ist.

Gemäß einer weiteren beispielhaften Ausgestaltung des Sitzbauteils ist die Halteausnehmung als Durchbruch im Wandschnitt ausgebildet. Demgemäß kann die Halteausnehmung etwa durch ein Loch in einer grundsätzlich flach gestalteten Wand des Sitzbauteils gebildet sein. Somit ist der fertigungstechnische Aufwand auf Seiten des Wandabschnitts besonders gering. Die Größe und Ausdehnung des Durchbruchs sowie die Wanddicke im Bereich der Halteausnehmung sind vorzugsweise an die Tiefe und Dicke der Einschnürung des Halteabschnitts des Aufprallschutzes angepasst.

Gemäß einer weiteren beispielhaften Ausgestaltung des Sitzbauteils ist der Wandabschnitt einem mittels Spritzguss hergestellten Schalenkörper zugehörig. Bei dem Schalenkörper kann es sich etwa um eine Rückenschale eines Fahrzeugsitzes handeln. Insbesondere handelt es sich bei dem Schalenkörper um eine Außenschale. Der Schalenkörper kann als Doppelschale gestaltet sein.

Gemäß einer weiteren beispielhaften Ausgestaltung des Sitzbauteils ist der Schalenkörper als Rückenschale ausgebildet, wobei der Wandabschnitt in einer Seitenwange der Rückenschale angeordnet ist. Demgemäß ist die Rückenschale dazu ausgestaltet, den Rumpf des Insassen zu stützen und den Rücken des Insassen zumindest teilweise seitlich zu umgreifen. Auf diese Weise deckt die Rückenschale auch seitliche Flanken des Insassen zumindest abschnittsweise ab. Die Rückenschale kann insbesondere mit zwei einander gegenüberliegenden Seitenwangen versehen sein, die jeweils einen Aufprallschutz tragen.

Das Sitzbauteil weist ferner eine Innenschale auf, die im montieren Zustand den Halteabschnitt, insbesondere einen Kragen des Halteabschnitts, gegen den Wandabschnitt drückt. Dies kann die Verliersicherheit weiter verbessern. Insbesondere kann der Kragen zumindest teilweise kraftschlüssig gehalten werden. Dies führt dazu, dass neben der formschlüssigen Lagesicherung auch die kraftschlüssige Lagesicherung zur Befestigung des Aufprallschutzes am Sitzbauteil beiträgt.

Vorzugsweise drückt die Innenschale den Kragen des Halteabschnitts gegen eine Außenschale des Sitzbauteils. Dabei weist der Kragen vorzugsweise eine Höhe (Wanddicke) auf, die zumindest etwas größer als ein definierter Abstand zwischen der Innenschale und der Außenschale in diesem Kontaktbereich ist. Auf diese Weise kann der Schaumwerkstoff im Bereich des Kragens komprimiert und verpresst werden.

Das Sitzbauteil umfasst einen doppelschaligen Aufbau mit einer Außenschale und einer Innenschale, die zumindest in einem Randbereich der Halteausnehmung voneinander beabstandet sind, wobei der Abstand zwischen der Innenschale und der Außenschale an eine Dicke des Halteabschnitts zwischen der Innenschale und der Außenschale angepasst ist. Bei der Dicke des Halteabschnitts handelt es sich insbesondere um eine Dicke bzw. Wandstärke des Kragens.

Die doppelschalige Gestaltung des Sitzbauteils mit der Außenschale und der Innenschale hat den Vorteil, dass der Aufprallschutz zusätzlich durch ein Verpressen/Verklemmen des Kragens in seiner Montageposition gehalten werden kann. Je nach Abstimmung des Abstands zwischen der Innenschale und der Außenschale sowie der Dicke des Kragens des Halteabschnitts kann eine leichte oder stärkere Kompression erzeugt werden. Auf diese Weise wird der Aufprallschutz fest an seinem Kragen am Schalenkörper gehalten. Dies verhindert übermäßige Deformationen, Verwindungen und/oder sogar ein Lösen des Aufprallschutzes.

Gemäß einer weiteren beispielhaften Ausgestaltung des Sitzbauteils ist am Wandabschnitt zumindest eine Positionierhilfe für den Aufprallschutz angeordnet, der ein Gegenstück beim Aufprallschutz zugeordnet ist, wobei die Positionierhilfe und das Gegenstück im montierten Zustand ineinander greifen.

Die Positionierhilfen beim Aufprallschutz sowie beim Wandabschnitt können etwa Nasen, Rippen, Ausnehmungen und entsprechende Gegenstücke beim jeweils anderen Teil umfassen. Die Positionierhilfe dient insbesondere dazu, eine Soll-Orientierung zwischen dem Aufprallschutz und dem Wandabschnitt bei der Montage sicherzustellen. Dies kann die Montage weiter vereinfachen und Fehlmontagen verhindern.

Eine beispielhafte Ausführungsform bezieht sich auf einen Aufprallschutz in Form eines Seitenaufprallschutzes für einen Fahrzeugsitz, wobei der Aufprallschutz einen Prallkörper aus einem stoßabsorbierenden Werkstoff und einen Halteabschnitt aufweist, und über den Halteabschnitt formschlüssig und verliersicher in einer Halteausnehmung aufnehmbar ist, insbesondere verrastbar ist. Insbesondere ist der Seitenaufprallschutz dazu ausgestaltet, an einer Seitenwange eines Fahrzeugsitzes zumindest teilweise formschlüssig aufgenommen zu werden. Der Aufprallschutz kann auch als Seitenpolster bezeichnet werden. Ein Fahrzeugsitz kann mit zwei derartigen Aufprallschutzen versehen sein, die an einander gegenüberliegenden Seitenwangen des Fahrzeugsitzes angebracht und jeweils nach außen (weg vom Insassen) orientiert sind.

Gemäß einem weiteren Aspekt bezieht sich die vorliegende Offenbarung auf einen Fahrzeugsitz, der mit einem Sitzbauteil gemäß einer der hierin genannten Ausgestaltungen versehen ist, wobei das Sitzbauteil einen Aufprallschutz trägt.

Gemäß einem weiteren Aspekt bezieht sich die vorliegende Offenbarung auf einen Kindersitz zur Verwendung in Fahrzeugen, mit einem Sitzbauteil gemäß einer der hierin beschriebenen Ausgestaltung, wobei das Sitzbauteil der Aufprallschutz aufweist, der als Seitenaufprallschutz ausgebildet ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Figur 1: eine perspektivische Ansicht eines als Kindersitz ausgebildeten Fahrzeugsitzes;
- Figur 2: eine Ansicht des Kindersitzes gemäß Fig. 1 in einem eingebauten Zustand;
- Figur 3: eine perspektivische Ansicht einer beispielhaften Ausgestaltung eines Fahrzeugsitzes;
- Figur 4: eine perspektivische Ansicht einer weiteren beispielhaften Ausgestaltung eines Fahrzeugsitzes;
- Figur 5: eine perspektivische rückwärtige Ansicht eines Sitzbauteils für einen Fahrzeugsitz, insbesondere für einen Kindersitz;
- Figur 6: eine frontale perspektivische Ansicht des Sitzbauteils gemäß Fig. 5 in einem explodierten Zustand;
- Figur 7: eine rückwärtige perspektivische Ansicht des Sitzbauteils gemäß Fig. 5 in einem explodierten Zustand;
- Figur 8: eine rückwärtige Ansicht des Sitzbauteils gemäß Fig. 5;
- Figur 9: einen Schnitt durch das Sitzbauteil gemäß Fig. 8 entlang der Linie IX-IX in Fig. 8;
- Figur 10: eine vergrößerte Teilansicht der Darstellung gemäß Fig. 9;
- Figur 11: eine explodierte Darstellung der Ansicht gemäß Fig. 10, wobei in Fig. 11 eine Innenschale nicht geschnitten dargestellt ist;
- Figur 12: eine Seitenansicht des Sitzbauteils gemäß Fig. 5;
- Figur 13: einen frontalen Schnitt durch das Sitzbauteil gemäß Fig. 12 entlang der Linie XIII-XIII in Fig. 12;
- Figur 14: eine Seitenansicht des Sitzbauteils gemäß Fig. 12, wobei eine Innenschale des Sitzbauteils ausgeblendet ist; und
- Figur 15: eine frontale Schnittansicht der Darstellung gemäß Fig. 14 entlang der Linie XV-XV in Fig. 14.

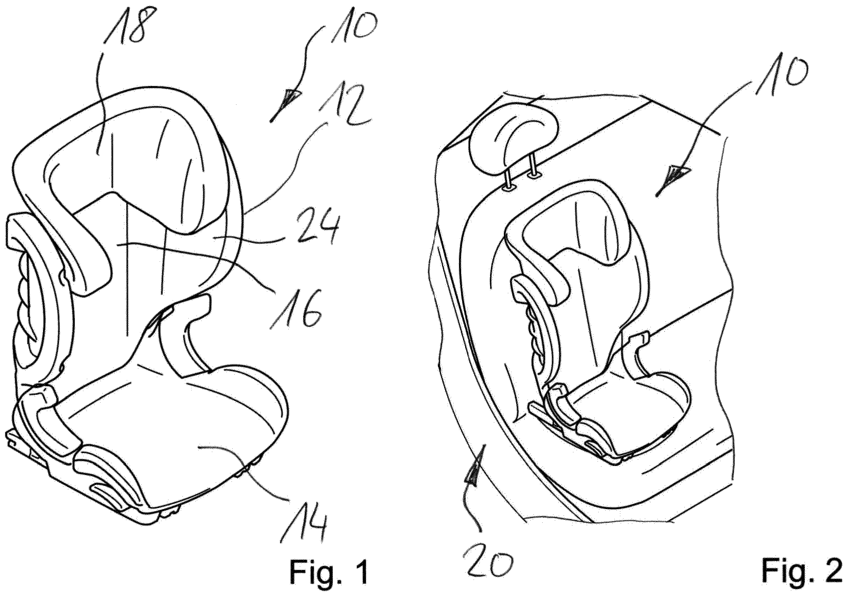

Mit Bezugnahme auf die Fig. 1, 2, 3 und 4 werden verschiedene Ausgestaltungen von Fahrzeugsitzen veranschaulicht, bei denen ein Aufprallschutz gemäß der vorliegenden Offenbarung grundsätzlich verwendbar ist.

Fig. 1 und 2 veranschaulichen einen insgesamt mit 10 bezeichneten Fahrzeugsitz, der als Kindersitz 12 gestaltet ist. Der Fahrzeugsitz 10 weist eine Sitzauflage 14 und eine Rückenlehne 16 auf. Ferner ist ein Kopfteil 18 vorgesehen, das an der Rückenlehne 16 befestigt ist. Die Rückenlehne 16 und das Kopfteil 18 können grundsätzlich einteilig oder mehrteilig gestaltet sein. Das Kopfteil 18 ist üblicherweise verstellbar an der Rückenlehne 16 aufgenommen. An der Rückenlehne 16 sind ferner Seitenwangen 24 zur seitlichen Führung bzw. zum seitlichen Schutz eines Insassen des Fahrzeugsitzes 10 ausgebildet. Die Seitenwangen 24 umgreifen einen Oberkörper des Fahrzeuginsassen zumindest teilweise.

Fig. 2 veranschaulicht einen Zustand, bei dem ein solcher als Kindersitz 12 ausgebildeter Fahrzeugsitz 10 auf einer Sitzbank 20 in einem Fahrzeug befestigt ist.

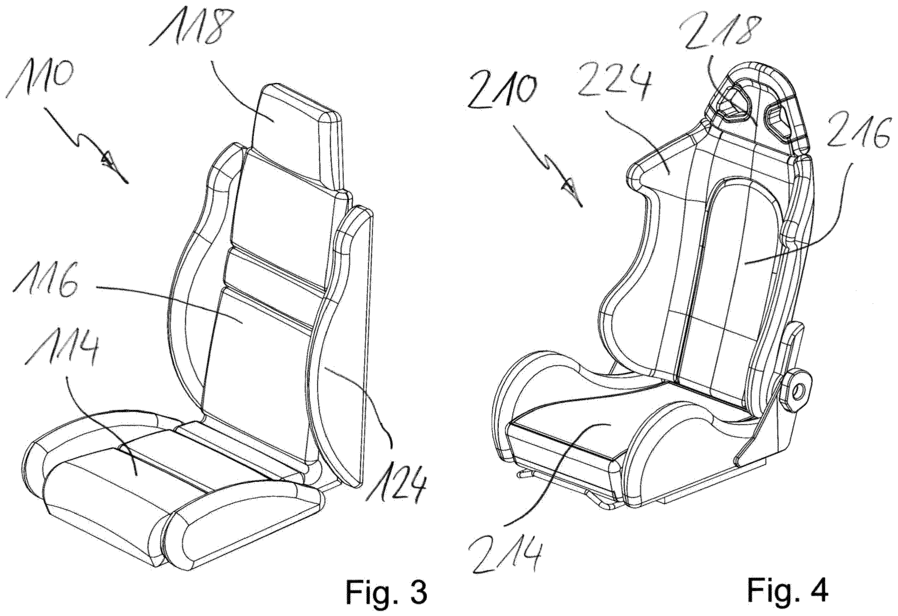

Fig. 3 veranschaulicht eine weitere beispielhafte Ausgestaltung eines Fahrzeugsitzes 110. Der Fahrzeugsitz 110 weist eine Sitzauflage 114 und eine Rückenlehne 116 auf, an der ein Kopfteil 118 aufgenommen ist, das etwa als Kopfstütze gestaltet ist.

Auch beim Fahrzeugsitz 110 gemäß Fig. 3 sind Sitzwangen 124 vorgesehen, die seitlich an der Rückenlehne 116 befestigt sind.

Fig. 4 veranschaulicht eine Ausgestaltung eines Fahrzeugsitzes 110, der als sogenannter Halbschalensportsitz gestaltet ist. Der Fahrzeugsitz 110 weist eine Sitzauflage 214 und eine Rückenlehne 216 auf. An der Rückenlehne 216 ist ferner ein Kopfteil 218 ausgebildet. Ferner weist die Rückenlehne 216 zwei Seitenwangen 224 auf, die integral mit der Rückenlehne 216 gebildet sind.

In zumindest einigen beispielhaften Ausführungsformen weisen die Fahrzeugsitze 10, 110, 210 Sitzauflagen 14, 114, 214 und Rückenlehnen 16, 116, 216 auf, die zueinander verstellbar bzw. verschwenkbar sind. Gleichwohl ist es auch vorstellbar, Fahrzeugsitze 10, 110, 210 derart zu gestalten, dass die Sitzauflage und die Rückenlehne und bei Bedarf auch das Kopfteil einstückig und nicht zueinander verstellbar gestaltet sind.

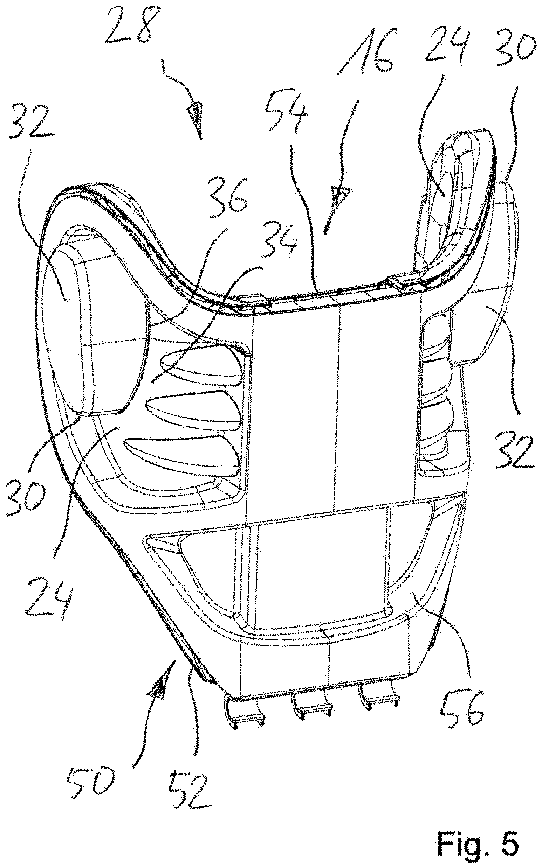

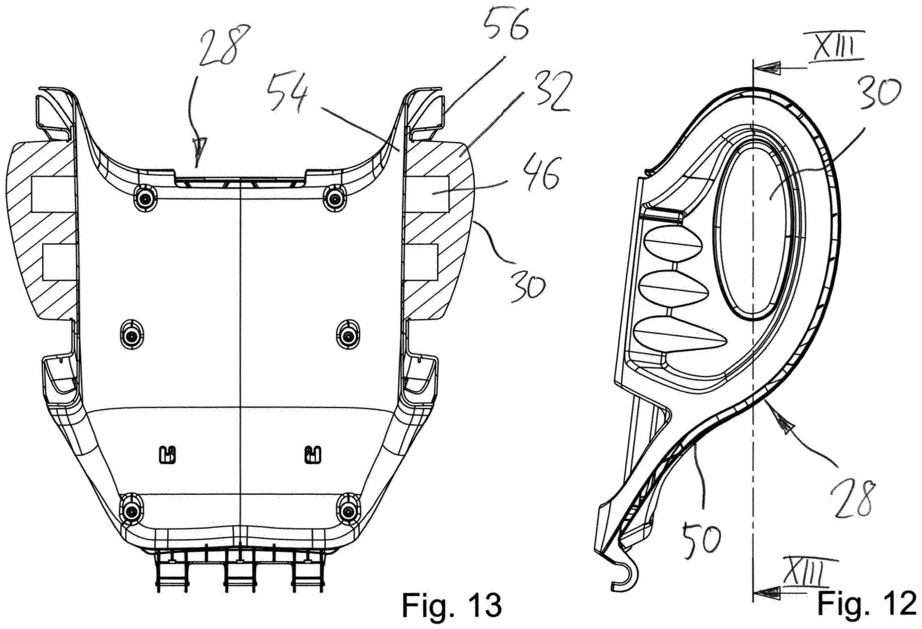

Mit Bezugnahme auf die Fig. 5 bis 15 wird eine beispielhafte Ausgestaltung eines Sitzbauteils 28 veranschaulicht, das mit einem Aufprallschutz 30 versehen ist. Das Sitzbauteil 28 ist beispielhaft als Rückenlehne 16 zur Verwendung bei dem Fahrzeugsitz 10 gemäß Fig. 1 ausgebildet, der als Kindersitz 12 gestaltet ist. Dies ist jedoch nicht einschränkend zu verstehen. Ein solches Sitzbauteil 28 kann auch derart abgewandelt werden, dass es bei dem Fahrzeugsitz 110 gemäß Fig. 3, bei dem Fahrzeugsitz 210 gemäß Fig. 4 oder bei anderen Gestaltungen von Sitzen, insbesondere von Fahrzeugsitzen, verwendbar ist. Gleichwohl stellt die Verwendung bei Kindersitzen ein wesentliches Anwendungsgebiet dar.

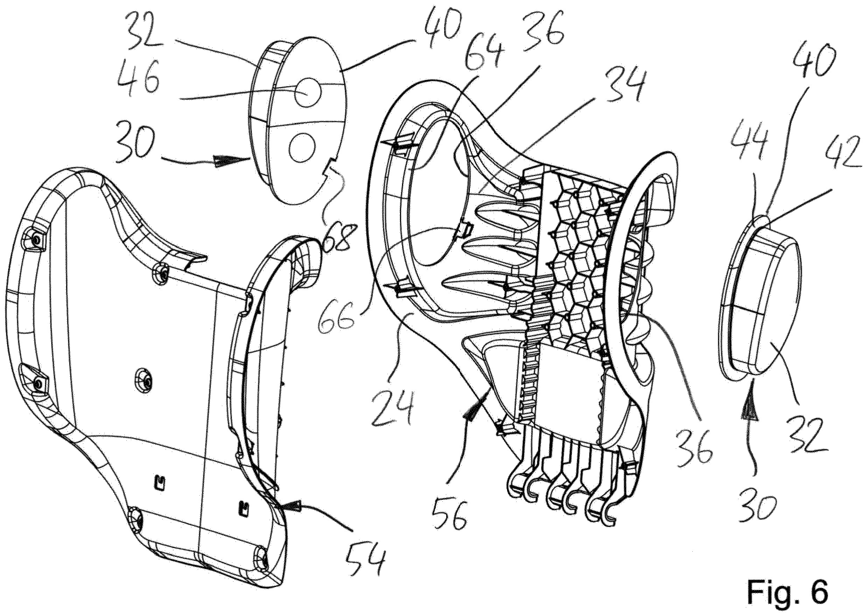

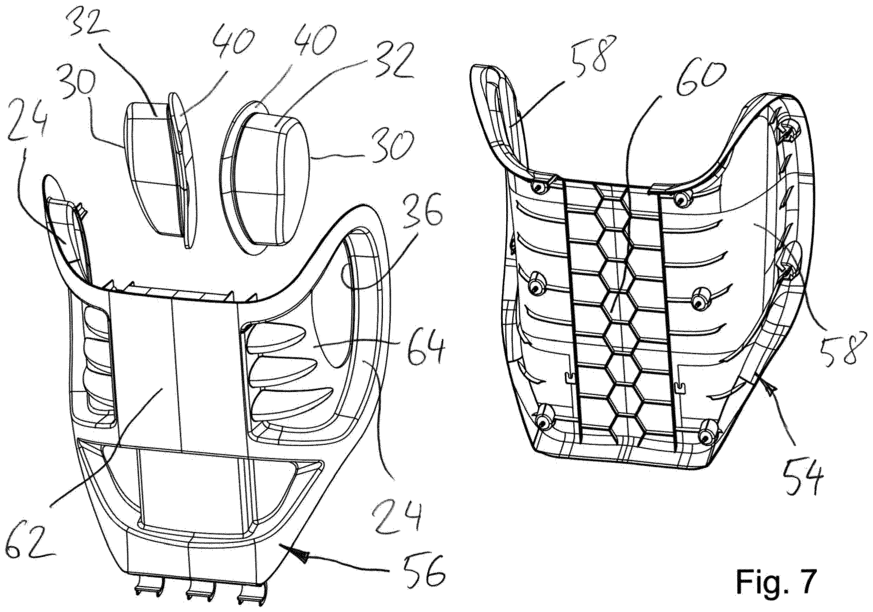

Wesentliche Komponenten des Sitzbauteils 28 werden mit Bezugnahme auf Fig. 5, Fig. 6 und Fig. 7 veranschaulicht. Fig. 6 und Fig. 7 zeigen verschiedene perspektivische explodierte Darstellungen des Sitzbauteils 28.

Das Sitzbauteil 28 ist mit einem Aufprallschutz 30 versehen, insbesondere mit zwei Aufprallschutzen 30, die paarweise einander gegenüberliegend jeweils an einer Seitenwange 24 der Rückenlehne 16 ausgebildet sind. Der Aufprallschutz 30 umfasst jeweils einen Prallkörper 32, der beispielsweise aus einem Schaumstoff oder Schaumwerkstoff hergestellt ist. Hierbei handelt es sich insbesondere um einen sogenannten viskoelastischen Schaum. Vorzugsweise wird ein viskoelastischer Schaum mit Memory-Effekt verwendet. Auf diese Weise kann der Prallkörper 32 Aufprallenergie gut absorbieren und Beschleunigungen, die im Falle eines Aufpralls auf den Insassen des Fahrzeugsitzes 10 einwirken, beträchtlich verringern.

Der Aufprallschutz 30 ist an einem Wandabschnitt 34 der Seitenwange 24 in einer Halteausnehmung 36 (vgl. Fig. 6 und Fig. 7) aufgenommen.

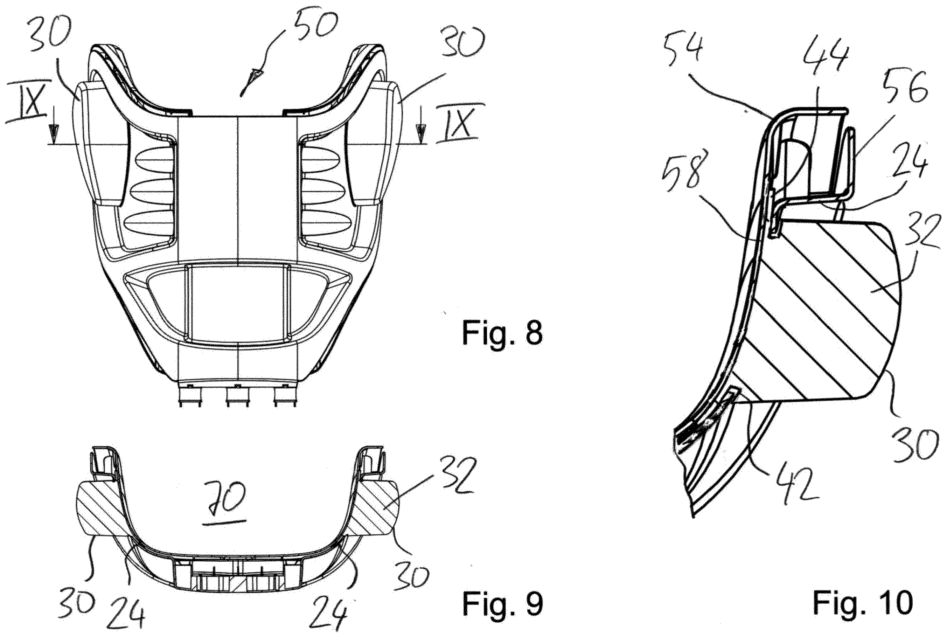

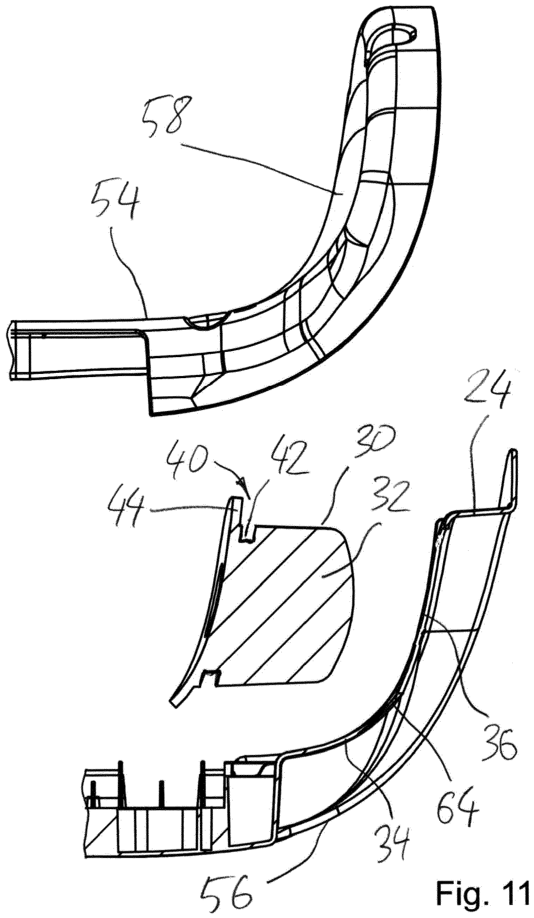

Der Aufprallschutz 30 umfasst neben dem Prallkörper 32 einen Halteabschnitt 40. Der Halteabschnitt 40 umfasst eine Einschnürung 42 und einen Kragen 44, vgl. auch die ergänzenden Darstellungen in den Fig. 8 bis 15, insbesondere in Fig. 11.

Die Einschnürung 42 ist zwischen dem Kragen 44 und dem Prallkörper 32 ausgebildet. Vorzugsweise ist der Aufprallschutz 30 einstückig gestaltet, insbesondere integral aus dem Schaumwerkstoff. Mit anderen Worten wird ein und derselbe Werkstoff benutzt, um den Halteabschnitt 40 und den Prallkörper 32 auszubilden.

Der Prallkörper 32 ist ferner beispielhaft mit Ausnehmungen 46 versehen, die rückwärtig an einer Seite des Aufprallschutzes 30 ausgebildet sind, die der Innenseite des Fahrzeugsitzes 10 zugewandt ist. Die Ausnehmung 46 oder die Ausnehmungen 46 kann/können die Deformierbarkeit und Fähigkeit zur Energieabsorption insbesondere des Prallkörpers 32 des Aufprallschutzes 30 weiter erhöhen.

Viskoelastische Schäume oder viskoelastische Weichschäume können beispielsweise aus Polyurethan (PUR) bestehen oder dieses zumindest enthalten. PUR-Schäume können ein günstiges viskoelastisches Verhalten aufweisen.

Eine Möglichkeit zur Oberflächengestaltung des Aufprallschutzes 30 ist beispielsweise das sogenannte In-Mold-Coating zur Beschichtung des Schaumwerkstoffes. Schaumstoffe, insbesondere Schaumstoffe auf PUR-Basis oder viskoelastische Schaumstoffe auf PUR-Basis, können integral verarbeitet werden, sodass in lediglich einem einzigen Fertigungsschritt die Endkontur des Aufprallschutzes 30 erzeugt werden kann.

Die Rückenlehne 16 ist als Schalenkörper 50 gestaltet. Gemäß dem anhand der Fig. 5, 6 und 7 veranschaulichten Ausführungsbeispiel handelt es sich bei dem Schalenkörper 50 um eine Rückenschale 52, die etwa eine Rückenlehne 16 des Fahrzeugsitzes 10 ausbildet.

Gemäß beispielhaften Ausführungsformen ist der Schalenkörper 50 zweischalig gestaltet, wobei eine Innenschale 54 und eine Außenschale 56 vorgesehen sind. Die Innenschale 54 ist diejenige Schale, die zwischen der Außenschale 56 und dem Fahrzeuginsassen angeordnet ist, der im Fahrzeugsitz 10 sitzt.

Die Rückenschale 52 weist an ihren Seitenwangen 24 den Wandabschnitt 34 auf, in dem die Halteausnehmung 36 ausgebildet ist, in der der Aufprallschutz 30 befestigt ist. Die Innenschale 54 kontaktiert im montierten Zustand ein nach innen gerichtetes Ende des Aufprallschutzes 30, insbesondere den Kragen 44. Eine entsprechende Seitenwange 24 der Innenschale 44 ist mit einer Druckfläche 58 versehen, welche den Kragen 44 des Aufprallschutzes 30 gegen einen Randbereich 64 des Wandabschnitts 36 drückt, welcher die Halteausnehmung 36 umschließt. Auf diese Weise wird der Aufprallschutz 30 über seinen Kragen 44 zwischen der Innenschale 54 und der Außenschale 56 verpresst, sodass sich eine gute Haltewirkung ergibt.

Die Innenschale 54 weist einen Zentralbereich 60 auf, an dem seitlich zwei Seitenwangen ausgebildet sind. Gleichermaßen weist die Außenschale 56 einen Zentralbereich 62 auf, an dem zwei Seitenwangen ausgebildet sind.

Fig. 6 veranschaulicht anhand einer beispielhaften Ausführungsform eine Montagehilfe oder Positionierhilfe für die Montage des Aufprallschutzes 30 am Sitzbauteil 28. Die Montage des Aufprallschutzes 30 erfolgt ausgehend von der in Fig. 7 gezeigten Orientierung, also ausgehend von der Innenseite in Richtung auf die Außenseite des Sitzbauteils 28. In diesem Zusammenhang kennzeichnet in Fig. 9 das Bezugszeichen 70 einen Zwischenraum zwischen den beiden Seitenwangen 24 des Sitzbauteils 28. Der Zwischenraum kann dem Innenraum gleichgesetzt werden. Der Aufprallschutz 30 wird folglich mit seinem Prallkörper 32 voraus von innen nach außen durch die Halteausnehmung 36 durchgeschoben.

Eine Drehorientierung (Winkellage) zwischen dem Aufprallschutz 30 und dem Wandabschnitt 34 wird beispielhaft durch Positionierhilfen 66, 68 gewährleistet, welche eine Soll-Montage-Orientierung definieren. Beispielhaft ist bei der Halteausnehmung 36 im Randbereich 64 eine erhabene Positionierhilfe 66 ausgebildet. Demgemäß weist der Aufprallschutz 30 im Bereich des Kragens 44 eine korrespondierende Positionierhilfe 68 auf, die als Ausschnitt oder Ausnehmung gestaltet ist. Wenn die Positionierhilfen 66, 68 in Überdeckung gebracht sind, kann der Aufprallschutz 30 montiert werden. Die Positionierhilfe 68 bildet ein Gegenstück zur Positionierhilfe 66, und umgekehrt.

Es versteht sich, dass andere Ausgestaltungen von Positionierhilfen denkbar sind. Je nach tatsächlicher Gestaltung des Aufprallschutzes 30 kann auch auf Positionierhilfen verzichtet werden.

Insgesamt weist der Prallkörper 32 des Aufprallschutzes 30 eine ovale Gestaltung auf, wobei etwa in Fig. 10 veranschaulicht wird, dass sich das Profil des Prallkörpers 32 ausgehend vom Kragen 44 in Richtung auf das vom Kragen 44 abgewandte Ende (also von innen nach außen) etwas verjüngt. Dies kann die Montage weiter vereinfachen.

Die Fig. 9 und 10 zeigen Schnitte durch das Sitzbauteil 28, wobei eine Orientierung der Schnittebene der Linie IX-IX der Darstellung in Fig. 8 entnehmbar ist. Fig. 10 zeigt eine vergrößerte Teildarstellung der Anordnung gemäß Fig. 9.

Ergänzend wird auf Fig. 11 verwiesen, welche eine Darstellung zeigt, die der Anordnung gemäß Fig. 10 grundsätzlich ähnlich ist, wobei Fig. 11 eine explodierte Darstellung aufweist.

Den Schnittansichten in Fig. 10 und Fig. 11 kann entnommen werden, dass die Einschnürung 42 etwa als umlaufende Nut oder Einkerbung in einem Übergangsbereich zwischen dem Prallkörper 32 und dem Kragen 44 ausgebildet ist. Im gefügten Zustand, vgl. auch Fig. 10, greift der Randbereich 64 des Wandabschnitts 34, der die Halteausnehmung 36 umgibt, in die Einschnürung 42 ein. Auf diese Weise kann eine Verrastung zwischen dem Aufprallschutz 30 und dem Wandabschnitt 34 des Sitzbauteils 28 erzielt werden. Insbesondere dann, wenn der Werkstoff, aus dem Aufprallschutz 30 besteht oder im Wesentlichen besteht, zumindest teilweise elastisch gestaltet ist, kann sich schon durch diese Maßnahme eine sichere und feste Verbindung ergeben.

Ein Durchziehen des Aufprallschutzes 30 von innen nach außen wird durch den Kragen 44 verhindert, der über das (beispielsweise ovale) Profil das Prallkörpers 32 hinausragt. Insgesamt weist der Kragen 44 einen größeren Umfang als der Prallkörper 32 auf.

Zumindest gemäß beispielhaften Ausführungsformen wird der Kragen 44 im gefügten Zustand, vgl. Fig. 10, zwischen der Innenschale 54 und der Außenschale 56 eingeklemmt. Auf diese Weise ergibt sich neben der formschlüssigen Lagesicherung zusätzlich auch eine kraftschlüssige Lagesicherung zwischen dem Aufprallschutz 30 und dem Sitzbauteil 28.

Die Montage des Aufprallschutzes 30 kann also derart vonstatten gehen, dass zunächst der Aufprallschutz 30 mit seinem Prallkörper 32 voran von innen nach außen durch die Halteausnehmung 36 im Wandabschnitt 34 der Seitenwange 34 der Außenschale 56 geschoben wird. Hierbei verrastet die Einschnürung 42 mit dem Randbereich 64 des Wandabschnitts 34.

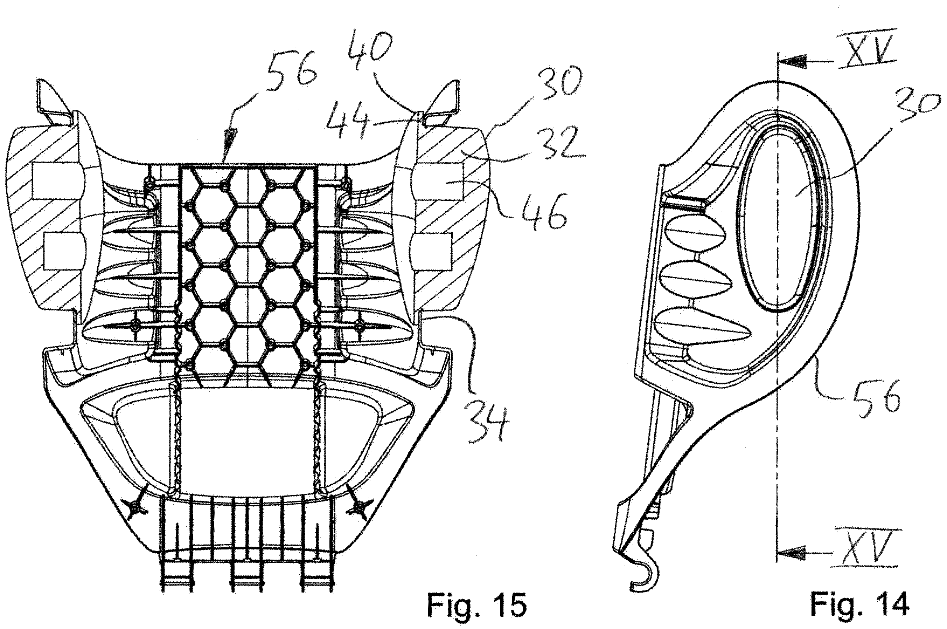

Ein solcher Zustand kann beispielsweise den Fig. 14 und 15 entnommen werden, die bewusst auf eine Darstellung der Innenschale 54 verzichten. Es ist vorstellbar, dass bereits in einer derartigen Konfiguration eine hinreichend große Festigkeit und Verliersicherheit für den Aufprallschutz 30 gewährleistet ist.

Jedoch ist es gemäß zumindest einigen Ausführungsformen bevorzugt, wenn sodann die Innenschale 54 zugeführt und mit der Außenschale 56 verbunden wird. Dies kann grundsätzlich eine Verschraubung oder eine ähnliche kraftschlüssige/reibschlüssige Verbindung beinhalten. Gleichwohl ist auch eine formschlüssige, stoffschlüssige und/oder eine sonstige Verbindung vorstellbar. Die Innenschale 54 wird gegen die Außenschale 56 gedrückt, sodass der Kragen 44 dazwischen verpresst wird.

Ferner bezieht sich die folgende Offenbarung auf Ausgestaltungen gemäß den folgenden Merkmalen bzw. Merkmalsgruppen:
1. Sitzbauteil, insbesondere für einen Fahrzeugsitz, mit einem Wandabschnitt, der eine Halteausnehmung aufweist, und mit einem Aufprallschutz, der einen Prallkörper aus einem stoßabsorbierenden Werkstoff und einen Halteabschnitt aufweist, und über den Halteabschnitt formschlüssig und verliersicher in der Halteausnehmung verrastbar ist.
2. Sitzbauteil nach Merkmalsgruppe 1, wobei der Prallkörper einen Schaumwerkstoff aufweist, insbesondere einen viskoelastischen Schaum.
3. Sitzbauteil nach Merkmalsgruppe 1 oder 2, wobei der Aufprallschutz einstückig gestaltet ist und vorzugsweise aus einem viskoelastischen Schaum besteht.
4. Sitzbauteil nach einer der Merkmalsgruppen 1 bis 3, wobei der Halteabschnitt zumindest abschnittsweise mit einer Einschnürung versehen ist, die an die Form der Halteausnehmung angepasst ist.
5. Sitzbauteil nach einer der Merkmalsgruppen 1 bis 4, wobei am Halteabschnitt ein Kragen ausgebildet ist.
6. Sitzbauteil nach einer der Merkmalsgruppen 1 bis 5, wobei der Aufprallschutz in einer Soll-Montage-Richtung in der Halteausnehmung montierbar ist, die eine Montage von innen nach außen umfasst.
7. Sitzbauteil nach einer der Merkmalsgruppen 1 bis 6, wobei die Halteausnehmung als Durchbruch im Wandschnitt ausgebildet ist.
8. Sitzbauteil nach einer der Merkmalsgruppen 1 bis 7, wobei der Wandabschnitt einem mittels Spritzguss hergestellten Schalenkörper zugehörig ist, insbesondere einer Außenschale.
9. Sitzbauteil nach einer der Merkmalsgruppen 1 bis 8, wobei der Schalenkörper als Rückenschale ausgebildet ist, wobei der Wandabschnitt in einer Seitenwange der Rückenschale angeordnet ist.
10. Sitzbauteil nach einer der Merkmalsgruppen 1 bis 9, ferner aufweisend eine Innenschale, die im montieren Zustand den Halteabschnitt, insbesondere einen Kragen des Halteabschnitts, gegen den Wandabschnitt drückt.
11. Sitzbauteil nach einer der Merkmalsgruppen 1 bis 10, umfassend einen doppelschaligen Aufbau mit einer Außenschale und einer Innenschale, die zumindest in einem Randbereich der Halteausnehmung voneinander beabstandet sind, wobei der Abstand zwischen der Innenschale und der Außenschale an eine Dicke des Halteabschnitts zwischen der Innenschale und der Außenschale angepasst ist.
12. Sitzbauteil nach einer der Merkmalsgruppen 1 bis 11, wobei am Wandabschnitt zumindest eine Positionierhilfe für den Aufprallschutz angeordnet ist, der ein Gegenstück beim Aufprallschutz zugeordnet ist, wobei die Positionierhilfe und das Gegenstück im montierten Zustand ineinander greifen.
13. Aufprallschutz in Form eines Seitenaufprallschutzes für einen Fahrzeugsitz, wobei der Aufprallschutz einen Prallkörper aus einem stoßabsorbierenden Werkstoff und einen Halteabschnitt aufweist, und über den Halteabschnitt formschlüssig und verliersicher in einer Halteausnehmung aufnehmbar ist.
14. Fahrzeugsitz mit einem Sitzbauteil nach einer der Merkmalsgruppen 1 bis 12.
15. Kindersitz zur Verwendung in Fahrzeugen, mit einem Sitzbauteil nach einer der Merkmalsgruppen 1 bis 12, wobei der Aufprallschutz als Seitenaufprallschutz ausgebildet ist.

## Patentansprüche

1. Sitzbauteil (28), insbesondere für einen Fahrzeugsitz (10, 110, 210), mit
einem Wandabschnitt (34), der eine Halteausnehmung (36) aufweist,
einem Aufprallschutz (30), der einen Prallkörper (32) aus einem stoßabsorbierenden Werkstoff und einen Halteabschnitt (40) aufweist, und über den Halteabschnitt (40) formschlüssig und verliersicher in der Halteausnehmung (36) verrastbar ist,
wobei der Prallkörper (32) einen Schaumwerkstoff aufweist, und wobei am Halteabschnitt (40) ein Kragen (44) ausgebildet ist,
**dadurch gekennzeichnet,**
**dass** eine Innenschale (54) vorgesehen ist, die im montieren Zustand den Kragen (44) des Halteabschnitts (40) gegen den Wandabschnitt (34) drückt,
**dass** das Sitzbauteil (28) einen doppelschaligen Aufbau mit einer Außenschale (56) und einer Innenschale (54) umfasst, die zumindest in einem Randbereich (64) der Halteausnehmung (36) voneinander beabstandet sind, und
**dass** der Abstand zwischen der Innenschale (54) und der Außenschale (56) an eine Dicke des Halteabschnitts (40) zwischen der Innenschale (54) und der Außenschale (56) angepasst ist.

2. Sitzbauteil (28) nach Anspruch 1, **dadurch gekennzeichnet, dass** der Prallkörper (32) einen Schaumwerkstoff in Form eines viskoelastischen Schaums aufweist.

3. Sitzbauteil (28) nach Anspruch 1 oder 2, **dadurch gekennzeichnet, dass** der Aufprallschutz (30) einstückig gestaltet ist.

4. Sitzbauteil (28) nach Anspruch 3, **dadurch gekennzeichnet, dass** der Aufprallschutz (30) aus einem viskoelastischen Schaum besteht.

5. Sitzbauteil (28) nach einem der Ansprüche 1 bis 4, **dadurch gekennzeichnet, dass** der Halteabschnitt (40) zumindest abschnittsweise mit einer Einschnürung (42) versehen ist, die an die Form der Halteausnehmung (36) angepasst ist.

6. Sitzbauteil (28) nach einem der Ansprüche 1 bis 5, **dadurch gekennzeichnet, dass** der Aufprallschutz (30) in einer Soll-Montage-Richtung in der Halteausnehmung (36) montierbar ist, die eine Montage von innen nach außen umfasst.

7. Sitzbauteil (28) nach einem der Ansprüche 1 bis 6, **dadurch gekennzeichnet, dass** die Halteausnehmung (36) als Durchbruch im Wandschnitt (34) ausgebildet ist.

8. Sitzbauteil (28) nach einem der Ansprüche 1 bis 7, **dadurch gekennzeichnet, dass** der Wandabschnitt (34) einem mittels Spritzguss hergestellten Schalenkörper (50) zugehörig ist.

9. Sitzbauteil (28) nach Anspruch 8, **dadurch gekennzeichnet, dass** der Wandabschnitt (34) der Außenschale (56) zugehörig ist.

10. Sitzbauteil (28) nach einem der Ansprüche 1 bis 9, **dadurch gekennzeichnet, dass** der Schalenkörper (50) als Rückenschale (52) ausgebildet ist, und dass der Wandabschnitt (34) in einer Seitenwange (24) der Rückenschale (52) angeordnet ist.

11. Sitzbauteil (28) nach einem der Ansprüche 1 bis 10, **dadurch gekennzeichnet, dass** am Wandabschnitt (34) zumindest eine Positionierhilfe (66) für den Aufprallschutz (30) angeordnet ist, der ein Gegenstück (68) beim Aufprallschutz (30) zugeordnet ist, wobei die Positionierhilfe (66) und das Gegenstück (68) im montierten Zustand ineinander greifen.

12. Fahrzeugsitz (10, 110, 210) mit einem Sitzbauteil (28) nach einem der Ansprüche 1 bis 11.

13. Kindersitz (10) zur Verwendung in Fahrzeugen, mit einem Sitzbauteil (28) nach einem der Ansprüche 1 bis 11, wobei der Aufprallschutz (30) als Seitenaufprallschutz ausgebildet ist.

## Claims

1. A seat component (28), in particular for a vehicle seat (10, 110, 210), comprising a wall portion (34) that comprises a retaining recess (36),
an impact protector (30), which comprises an impact body (32) made of a shock-absorbing material, and a retaining portion (40), and which can be latched in the retaining recess (36) in a form-fitting and captive manner via the retaining portion (40), wherein the impact body (32) comprises a foam material, and wherein a collar (44) is formed at the retaining portion (40),
**characterized in that**,
an inner shell (54) is provided, which, in the assembled state, presses the collar (44) of the retaining portion (40) against the wall portion (34),
the seat component (28) comprises a double-shell structure having an outer shell (56) and an inner shell (54), which are spaced apart from one another at least in a periphery region (64) of the retaining recess (36), and
the distance between the inner shell (54) and the outer shell (56) is adapted to a thickness of the retaining portion (40) between the inner shell (54) and the outer shell (56).

2. The seat component (28) according to claim 1, **characterized in that** the impact body (32) comprises a foam material in the form of a viscoelastic foam.

3. The seat component (28) according to claim 1 or 2, **characterized in that** the impact protector (30) is designed in one piece.

4. The seat component (28) according to claim 3, **characterized in that** the impact protector (30) consists of a viscoelastic foam.

5. The seat component (28) according to any one of claims 1 to 4, **characterized in that** the retaining portion (40) is at least sectionally provided with a constriction (42) that is adapted to the shape of the retaining recess (36).

6. The seat component (28) according to any one of claims 1 to 5, **characterized in that** the impact protector (30) can be mounted in a set mounting direction in the retaining recess (36), which involves mounting from the inside to the outside.

7. The seat component (28) according to any one of claims 1 to 6, **characterized in that** the retaining recess (36) is formed as an opening in the wall portion (34).

8. The seat component (28) according to any one of claims 1 to 7, **characterized in that** the wall portion (34) is associated with a shell body (50) that is manufactured by injection molding.

9. The seat component (28) according to claim 8, **characterized in that** the wall portion (34) is associated with the outer shell (56).

10. The seat component (28) according to any one of claims 1 to 9, **characterized in that** the shell body (50) is formed as a back shell (52), and **in that** the wall portion (34) is arranged in a side cheek (24) of the back shell (52).

11. The seat component (28) according to any one of claims 1 to 10, **characterized in that** at least one positioning aid (66) for the impact protector (30) is arranged on the wall portion (34), to which a counterpart (68) is assigned at the impact protector (30), wherein the positioning aid (66) and the counterpart (68) engage in one another in the assembled state.

12. A vehicle seat (10, 110, 210) comprising a seat component (28) according to any one of claims 1 to 11.

13. A child seat (10) for use in vehicles, comprising a seat component (28) according to any one of claims 1 to 11, wherein the impact protector (30) is arranged as a side impact protection.

## Revendications

1. Composant de siège (28), en particulier pour un siège de véhicule (10, 110, 210), comprenant une portion de paroi (34) qui présente un évidement de retenue (36), une protection contre les impacts (30) qui présente un corps d'impact (32) constitué d'un matériau absorbant les chocs et une portion de retenue (40), et qui peut être encliquetée par engagement par correspondance de formes et de manière imperdable dans l'évidement de retenue (36) par le biais de la portion de retenue (40), le corps d'impact (32) présentant un matériau à base de mousse, et un collet (44) étant réalisé au niveau de la portion de retenue (40),
**caractérisé**
**en ce qu'**une coque intérieure (54) est prévue, laquelle, dans l'état monté, presse le collet (44) de la portion de retenue (40) contre la portion de paroi (34),
**en ce que** le composant de siège (28) comprend une structure à double coque avec une coque extérieure (56) et une coque intérieure (54) qui sont espacées l'une de l'autre au moins dans une région de bord (64) de l'évidement de retenue (36), et
**en ce que** la distance entre la coque intérieure (54) et la coque extérieure (56) est adaptée à une épaisseur de la portion de retenue (40) entre la coque intérieure (54) et la coque extérieure (56).

2. Composant de siège (28) selon la revendication 1, **caractérisé en ce que** le corps d'impact (32) présente un matériau à base de mousse sous la forme d'une mousse viscoélastique.

3. Composant de siège (28) selon la revendication 1 ou 2, **caractérisé en ce que** la protection contre les impacts (30) est réalisée d'une seule pièce.

4. Composant de siège (28) selon la revendication 3, **caractérisé en ce que** la protection contre les impacts (30) se compose d'une mousse viscoélastique.

5. Composant de siège (28) selon l'une quelconque des revendications 1 à 4, **caractérisé en ce que** la portion de retenue (40) est pourvue au moins en partie d'un rétrécissement (42) qui est adapté à la forme de l'évidement de retenue (36).

6. Composant de siège (28) selon l'une quelconque des revendications 1 à 5, **caractérisé en ce que** la protection contre les impacts (30) peut être montée dans l'évidement de retenue (36) dans une direction de montage de consigne qui comprend un montage de l'intérieur vers l'extérieur.

7. Composant de siège (28) selon l'une quelconque des revendications 1 à 6, **caractérisé en ce que** l'évidement de retenue (36) est réalisé sous forme d'orifice dans la portion de paroi (34).

8. Composant de siège (28) selon l'une quelconque des revendications 1 à 7, **caractérisé en ce que** la portion de paroi (34) est associée à un corps de coque (50) fabriqué par moulage par injection.

9. Composant de siège (28) selon la revendication 8, **caractérisé en ce que** la portion de paroi (34) est associée à la coque extérieure (56).

10. Composant de siège (28) selon l'une quelconque des revendications 1 à 9, **caractérisé en ce que** le corps de coque (50) est réalisé sous forme de coque arrière (52) et **en ce que** la portion de paroi (34) est disposée dans une joue latérale (24) de la coque arrière (52).

11. Composant de siège (28) selon l'une quelconque des revendications 1 à 10, **caractérisé en ce qu'**au moins un auxiliaire de positionnement (66) pour la protection contre les impacts (30), auquel est associée une pièce conjuguée (68) au niveau de la protection contre les impacts (30), est disposé au niveau de la portion de paroi (34), l'auxiliaire de positionnement (66) et la pièce conjuguée (68) s'engageant l'un dans l'autre dans l'état monté.

12. Siège de véhicule (10, 110, 210) comprenant un composant de siège (28) selon l'une quelconque des revendications 1 à 11.

13. Siège pour enfants (10) pour l'utilisation dans des véhicules, comprenant un composant de siège (28) selon l'une quelconque des revendications 1 à 11, la protection contre les impacts (30) étant réalisée sous forme de protection contre les impacts latéraux.
